# EUROPEAN PATENT APPLICATION

(11) **EP 1 503 076 A2**
(43) Date of publication of application: **02.02.2005**
(21) Application number: 04014823.1
(22) Date of filing: 24.06.2004
(51) Int. Cl.: F03D 3/00, F03D 3/06

(54) **Wind engine construction**

(30) Priority: 21.07.2003 IT MI20031486
(71) Applicant: Nuove Iniziative Industriali S.r.l., 20145 Milano (IT)
(72) Inventor: Orlandi, Valentina, 20020 Robecchetto con Induno Milano (IT)
(74) Representative: Cicogna, Franco

(57) **Abstract**

A wind engine construction comprises sail elements arranged on an arm arrangement, so as to assume a helical pattern, the arms being rigid with a shaft for driving an user device.

## Description

### BACKGROUND OF THE INVENTION

The present invention relates to a wind engine construction.

The wind engines, or air motors, are engines are motors provided for picking up the wind power and transmit it to an user machine.

Generally, a wind engine is mounted on a bearing construction allowing to use the wind power at a given height from the ground, where the wind speed is greater and less affected by ground obstacles and unevennesses.

In recent years have been increasingly designed high speed wind engines, for operating electric generators, which high speed wind engines conventionally comprise a propeller having a comparatively small number of blades, usually two or three blades.

A main problem associated with wind towers is the comparatively high difficulty of "picking up" the wind and direct it toward the rotary blades, since the wind motion is a discontinuous and not unidirectional one, which changes its direction and intensity in a sudden manner.

### SUMMARY OF THE INVENTION

Accordingly, the aim of the present invention is to provide an improved wind tower, adapted to exploit wind in any directions thereof.

Within the scope of the above mentioned aim, a main object of the present invention is to provide a wind or aeolic tower, which can be so adjusted as to fit it to any wind conditions, thereby providing a high efficiency, and adapted to transform into power the wind coming from any direction.

Another object is to provide such a wind tower which is of very small weight and very efficient from a mechanical standpoint.

Yet another object of the present invention is to provide such a wind tower adapted to provide electric power even in weak wind conditions, such as with a wind speed of 2-3 m/s.

According to one aspect of the present invention, the above mentioned aim and objects, as well as yet other objects, which will become more apparent hereinafter, are achieved by a wind engine construction, characterized in that said wind engine construction comprises a plurality of sail elements arranged on an arm arrangement so as to assume a helical pattern, said arms being rigid with a drive shaft for driving a user device.

### BRIEF DESCRIPTION OF THE DRAWINGS

Further characteristics and advantages of the present invention will become more apparent hereinafter from the following detailed disclosure of a preferred, though not exclusive, embodiment of the invention, which is illustrated, by way of an indicative, but not limitative, example, in the accompanying drawings, where:

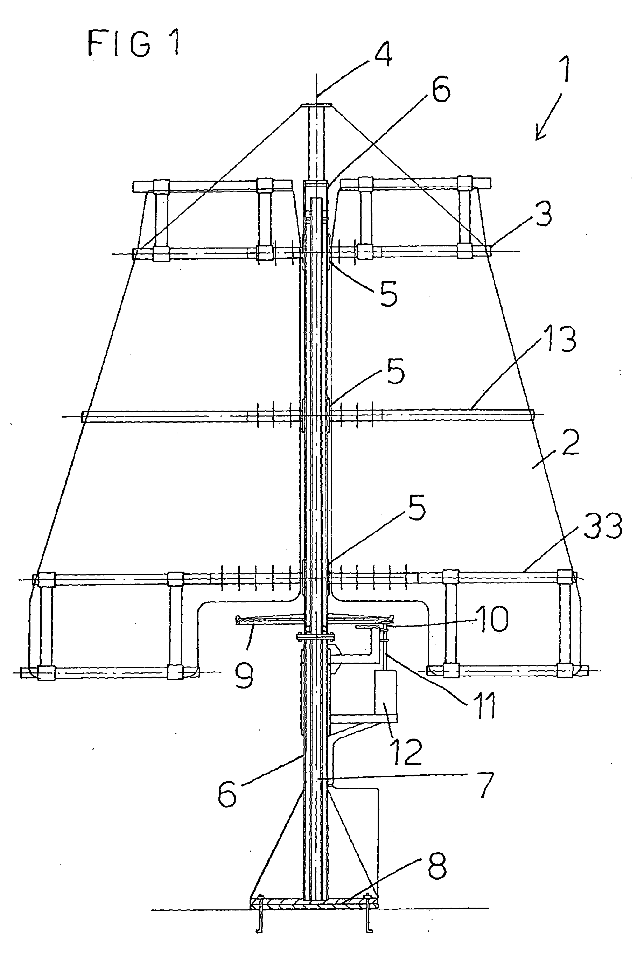

Figure 1 is an elevation partially cross-sectioned view of the wind tower according to the present invention;

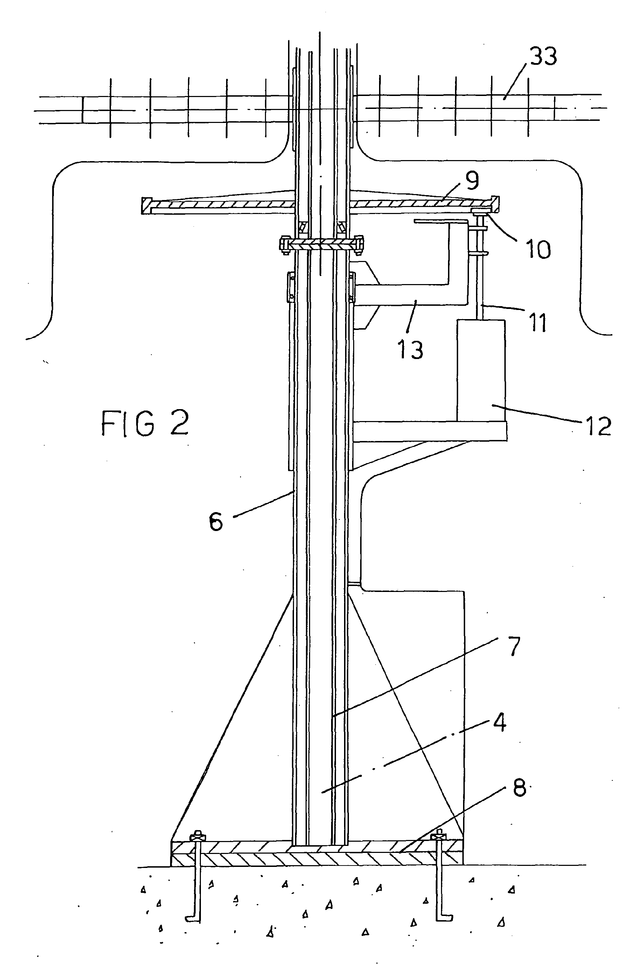

Figure 2 is a further elevation view, on an enlarged scale, of a detail of the bearing construction;

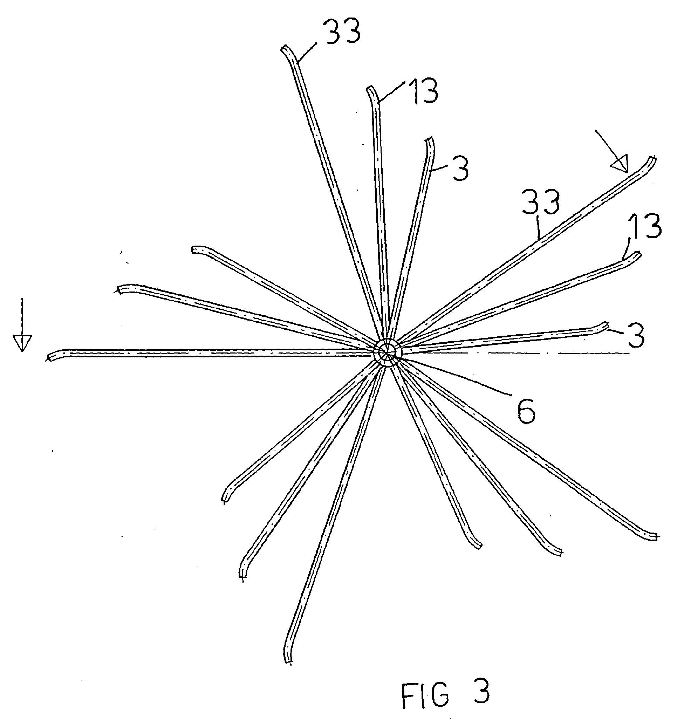

Figure 3 is a top plan view showing the arms of the sail elements; and

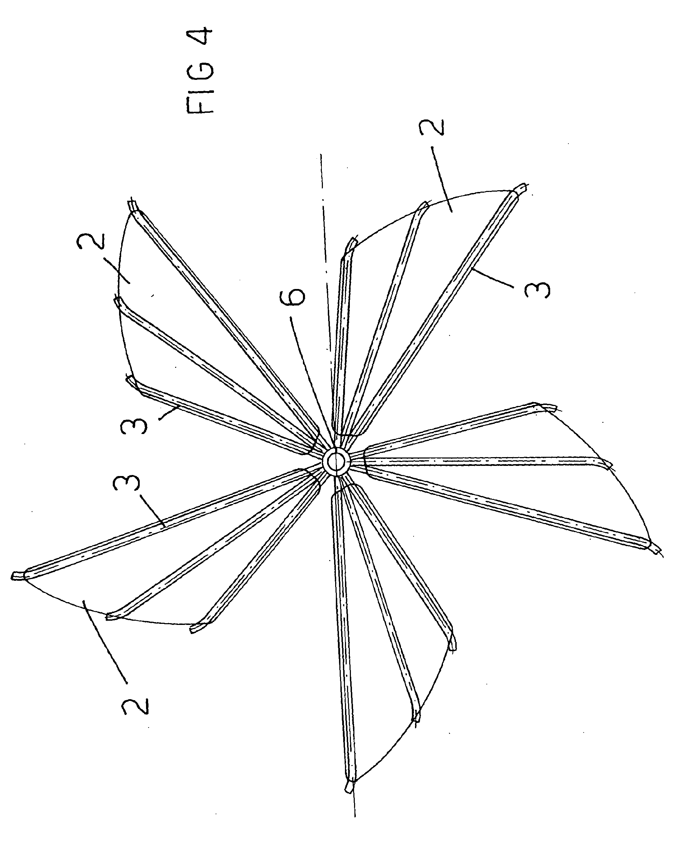

Figure 4 is a further top plan view of the sail elements.

### DESCRIPTION OF THE PREFERRED EMBODIMENT

With reference to the number reference of the above mentioned figures, the wind tower, according to the present invention, which has been generally indicated by the reference number 1, comprises a plurality of sail elements 2, arranged on a helical pattern arm arrangement 3, 13 and 33.

In the illustrated embodiment, the wind tower supports five sail elements, arranged on a three-arm system for each sail element of helical pattern.

Thus, in total we will have 15 arms arranged on three levels: five top arms, five middle arms and five bottom arms.

Thus, each sail element 2 comprises three arms arranged along the longitudinal (vertical) axis 4 of the wind tower, i.e. a top arm 3, a middle arm 13 and a bottom arm 33.

The length of each arm and the inter-axis from an arm to another arm will provide the sail element 2 with a helical configuration of pattern.

In the illustrated embodiment, the arms are slanted at 15° with respect to the vertical axis 4, i.e. the top plan angle, for example between the top arm 3 and middle arm 13, is of 15°.

As shown, the arms of the sail elements are anchored by anchoring collars 5, mounted on a rotary outer pole 6, the arms being bolted to said pole, for facilitating the assembling and disassembling of the framework.

This anchoring or clamping system would allow to properly manually adjust the opening of the arms, according to requirements.

The bearing construction or framework of the wind tower is made by using two concentrically arranged coaxial tubes: a first inner tube 7, of smaller diameter, and an outer tube 6, of larger diameter, to which the sail element arm collars are anchored.

More specifically, the inner pole or upright 7 is clamped to a supporting base 8 by weldments and forms the fixed portion of the wind tower, and has mainly supporting functions.

On the contrary, the outer pole or upright 6, forms the rotary portion of the system, since it is rigid with the sail element arms which transmit the motion thereof.

The coupling or connection system between the inner fixed pole and the rotary outer pole comprises two types of bearings, which are arranged respectively at the top and bottom of the inner pole.

At the top region, in particular, is mounted a ball radial bearing, which is clamped by constructional supporting elements between the two poles.

At the bottom region, on the contrary, a conic roller radial bearing is provided, which is also clamped by constructional supporting elements.

For constructional reasons, and to facilitate the assembling and disassembling of the overall construction, the wind tower according to the invention comprises a supporting construction including the inner pole 7 anchored to the supporting base 8 by weldments and supporting ribs.

The coupling between the wind tower and supporting pole is performed by a flanged type of connection.

The rotary construction, with exception of connecting elements such as bolts, nuts, washers, clamping screws and so on, is preferably made of an aluminum material.

The sail elements 2 are preferably made of a plasticized cloth material, adapted to resist against dynamic stresses and which, in the meanwhile, has a very low weight.

Thus, the great elasticity of this material will allow it to be easily deformed, upon turning the mentioned arms, thereby providing the required helical pattern.

The sail elements are moreover provided, on their surfaces, with holes reinforced by aluminum ring elements, allowing the sail elements to be properly clamped or anchored to said arms by tension cables or rigid plates bolted to said arms.

The transmission of the rotary motion to the sail elements is performed by using a conductive wheel 9, fixed on the rotary pole 6, and including two half-circular portions, which are coupled to one another by bolts.

On said wheel 9 is assembled a roller-type double chain, for driving a pinion 10 arranged inside said wheel and mounted on a shaft 11 which directly coupled to dynamo-inverter system 12 for providing electric power.

As shown, said pinion 10 and related shaft 11 are anchored to a supporting plate 13 which is mounted on the outer pole 6 of the wind tower.

Together with the pinion shaft are moreover provided two further supporting elements, comprising two ball radial bearings.

It has been found that the invention fully achieves the intended aim and objects.

In fact, the invention provides a wind tower adapted to exploit the wind in any directions, since the wind tower comprises sail elements instead of blades, thereby providing a very broad wind impact surface and a helical pattern facilitating the wind motion, or a rotary motion along its longitudinal axis.

Moreover, the clamping or anchoring system for clamping the arms to the construction, allows to properly adjust the sail element helical angle, to fit said sail elements to any wind conditions, thereby providing a very high operating efficiency; thus, it is possible to transform into power the wind coming from any directions.

Moreover, since the subject construction is fully made of an aluminum material, it has a very small weight and, furthermore, the operating frictions are also very small.

The subject construction, moreover, is also adapted to generate electric power in low wind conditions (a wind speed of 2-3 m/s): the generated power being then transformed and conveyed to the electric network.

The subject construction is unique, since its specifically designed pattern and its helical sail element system would allow it to be fully exploited, even in very poor wind conditions.

In practicing the invention, the used materials, and the contingent size, can be any, depending on requirement and the status of the art.

## Claims

1. A wind engine construction **characterized in that** said wind engine construction comprises a plurality of sail elements arranged on an arm arrangement so as to assume a helical pattern, said arms being rigid with a drive shaft for driving a user device.

2. A construction, according to claim 1, **characterized in that** said construction comprises five sail elements, arranged on a three-arm system for each helical pattern sail element, thereby providing a total of 15 arms arranged on three levels: five top arms, five middle arms and five bottom arms; each sail element including three arms arranged along a longitudinal vertical axis of the construction: a top arm, a middle arm and a bottom arm, so that the length of each arm and the inter-axis between an arm and another arm will provide a helical pattern sail element.

3. A construction, according to claim 2, **characterized in that** said arms are arranged with an angle of 15° with respect to the vertical axis, i.e. the top plan angle between two adjoining arms being of 15°.

4. A construction, according to one or more of the preceding claims, **characterized in that** the arms of the sail elements are anchored by collars mounted on an outer rotary pole, through bolt elements to facilitate the assembling and disassembling of the framework and for allowing to easily manually adjust the opening of said arms.

5. A construction, according to one or more of the preceding claims, **characterized in that** said construction comprises a bearing structure including two concentrically arranged coaxial tubes, a first inner tube having a less diameter and a second outer tube having a larger diameter, to which tubes are anchored said collars with said sail element arms.

6. A construction, according to one or more of the preceding claims, **characterized in that** the inner pole is affixed to a base by weldments and forms the fixed portion of the wind tower, thereby mainly providing a supporting function.

7. A construction, according to one or more of the preceding claims, **characterized in that** the connection system between the inner fixed pole and the outer rotary pole comprises two types of bearings, arranged at the top and bottom of the inner pole, and that at the top region a ball radial bearing is assembled, said ball radial bearing being fixed by constructional supporting elements between the two poles, at the bottom region a conic roller radial bearing also clamped by constructional supporting elements being provided.

8. A construction, according to one or more of the preceding claims, **characterized in that** said construction comprises moreover a further supporting element, formed by the inner pole, anchored to the base by weldments and supporting ribs, for facilitating the assembling and disassembling of the overall construction.

9. A construction, according to one or more of the preceding claims, **characterized in that** said construction is made, with the exception of connection elements such as bolts, nuts, washers, clamping screws in general, of an aluminum material.

10. A construction, according to one or more of the preceding claims, **characterized in that** said sail elements are made of a plasticized cloth material, adapted to resist against dynamic stresses and having a small weight.

11. A construction, according to one or more of the preceding claims, **characterized in that** said sail elements comprise, on their surfaces, a plurality of holes reinforced by aluminum ring elements allowing said sail elements to be clamped to said arms by tension cables or rigid plates bolted to said arms.

12. A construction, according to one or more of the preceding claims, **characterized in that** the transmission of the rotary motion of said sail elements occurs by using a conductive wheel clamped on the rotary pole and including two half-circular portions, intercoupled to one another by bolts; on said wheel being mounted a double chain, of a roller type, for driving a pinion arranged inside said wheel and mounted on a shaft which is directly coupled to a dynamo-inverter system for producing electric power, said pinion and related shaft being anchored to a supporting plate mounted on the outer pole, together with the pinion shaft, two further supporting elements comprising two ball radial bearings being moreover provided.
